# EUROPEAN PATENT SPECIFICATION

(11) **EP 3 230 353 B1**
(45) Date of publication and mention of the grant of the patent: **01.07.2020**
(21) Application number: 15819924.0
(22) Date of filing: 03.12.2015
(51) Int. Cl.: C08J 5/18, C08L 23/08

(54) **A FILM, A METHOD OF MAKING THE FILM, A PACKAGING COMPRISING THE FILM AND A METHOD OF MAKING THE PACKAGING**
FOLIE, VERFAHREN ZUR HERSTELLUNG DER FOLIE, VERPACKUNG MIT DER FOLIE UND VERFAHREN ZUR HERSTELLUNG DER VERPACKUNG
FILM, PROCÉDÉ DE FABRICATION DU FILM, EMBALLAGE COMPRENANT LE FILM ET PROCÉDÉ DE FABRICATION DE L'EMBALLAGE

(30) Priority: 09.12.2014 US 201462089309 P
(43) Date of publication of application: 18.10.2017
(73) Proprietor: Dow Global Technologies LLC, Midland, MI 48674 (US)
(72) Inventor: BILGEN, Mustafa, Manvel, TX 77578 (US); DEPLACE, Fanny, Lake Jackson, TX 77566 (US); CHOPIN, Lamy, J., III, Missouri City, TX 77459 (US)
(74) Representative: Boult Wade Tennant LLP
(86) International application number: PCT/US2015/063587
(87) International publication number: WO 2016/094155

(56) References cited:
- EP-A1- 1 426 181
- EP-B1- 0 938 516
- US-A1- 2003 198 715
- US-A1- 2007 275 196

## Description

### Field of Invention

The disclosure relates to a film, a method of making the film, a packaging comprising the film and a method of making the packaging.

### Background of the Invention

Fresh fish packaging requires very high oxygen transmission rate (OTR in cc/m²-day measured according to ASTM D3985) to prevent the growth of anaerobic bacteria. Currently, multilayer structures using an acrylate core layer with higher density polyethylene skin layer(s) are used in such packaging. Alternative structures providing very high OTR as well as sufficient stiffness and processability, such as in the manufacturing of flexible containers such as pouches, would be beneficial for fresh fish and other types of packaging.

EP-A-938,516 discloses a film structure suitable for the packaging of perishable food, comprising at least one film layer which in turn comprises a blend of at least one homogeneous linear or substantially linear ethylene polymer and at least one polypropylene polymer, wherein the film structure is characterized as having a 2 percent secant modulus which is at least 8 percent greater than a comparable film structure prepared without the polypropylene polymer, an oxygen transmission rate of at least 0.027 cc-(at STP)-cm/cm²-day-MPa) at 25°C.

US-A-2007/275196 discloses a multilayer film comprising an outer sealant layer, a stiffening layer comprising a thermoplastic styrenic rubber, and at least one inner layer disposed between the outer sealant layer and the stiffening layer, and wherein the film has a modulus of about 103.4 MPa (15,000 psi) or greater in at least one direction, and an oxygen transmission rate of at least 10,000 cc (STP)/m²/day/atm or greater at 23°C and 0% relative humidity.

EP-A-1,426,181 discloses a polyolefin packaging film of the kind that comprises an outer layer and an inner layer wherein the inner layer and outer layer have a content of a thermoplastic polyolefin, characterized in that the Tm of the inner layer is lower than the Tg of the outer layer, and that at least 50 wt% of the total polyolefin content of the outer layer is composed of at least one cyclicolefin compolymer.

### Summary of the Invention

The disclosure is for a film, a method of making the film, a packaging comprising the film and a method of making the packaging.

In one embodiment, the disclosure provides a film comprising a polymer blend which comprises from 90 to 95 wt% of a low density olefin-based plastomer or elastomer having a density equal to or less than 0.905 g/cc; from 5 to 10 wt% of a high modulus amorphous polymer; wherein a film comprising the polymer blend exhibits an oxygen transmission rate (OTR) of equal to or greater than 10,000 cc/m²+day.

### Detailed Description of the Invention

The disclosure provides a film, a method of making the film, a packaging comprising the film and a method of making the packaging.

"Polymer" refers to a polymeric compound prepared by polymerizing monomers, whether of the same or a different type. The generic term "polymer" thus embraces the terms "homopolymer," "copolymer," "terpolymer" as well as "interpolymer.

"Plastomer" means a homogeneously branched substantially linear ethylene polymer with a density in the range of from about 0.85 to about 0.905 g/cc (as measured in accordance with ASTM D-792).

"Low density" means having a density less than or equal to 0.905 g/cc.

"High density" means having a density greater than or equal to 0.930 g/cc.

"Elastomer" means an ethylene copolymer elastomer, such as a copolymer of ethylene with higher alpha-olefin or ethylene/propylene elastomers. Ethylene elastomer copolymers or ethylene/propylene copolymer elastomers may comprise crystallinity of 33% or less.

"High Modulus" means having a 2% secant modulus of greater than 500 MPa measured according to ASTM D882.

"An amorphous polymer" is a polymer which does not exhibit a true melting point.

In a first embodiment, the disclosure provides a film comprising a polymer blend which comprises from 90 to 95 wt% of a low density olefin-based plastomer or elastomer having a density equal to or less than 0.905 g/cc; and from 5 to 10 wt% of a high modulus amorphous polymer; wherein a film comprising the polymer blend exhibits an oxygen transmission rate (OTR) of equal to or greater than 10,000 cc/m²+day.

In a second embodiment, the disclosure provides a packaging which comprises the film.

In a third embodiment, the disclosure provides a method of making and filling a packaging comprising forming a pouch from the film of claim 1 wherein the pouch has an open side; filling the pouch with a product; and sealing the open side of the pouch to form a packaging.

The polymer blend has from 90 to 95 wt% of a low density olefin-based plastomer or elastomer having a density equal to or less than 0.905 g/cc. All individual values and subranges from 90 to 95 wt% are included and disclosed herein; for example, the amount of the olefin-based plastomer or elastomer may range from a lower limit of 90, 91, 92, 93 or 94 wt% to an upper limit of 90.5, 91.5, 92.5, 93.5, 94.5 or 95 wt%. For example, the amount of the olefin-based plastomer or elastomer can be from 90 to 95 wt%, or in the alternative, from 90 to 92.5 wt%, or in the alternative, from 92 to 95 wt%, or in the alternative, from 91.5 to 93.5 wt%. The olefin-based plastomer or elastomer has a density equal to or less than 0.905 g/cc. All individual values and subranges from equal to or less than 0.905 g/cc are included and disclosed herein. For example, the density of the olefin-based plastomer or elastomer is equal to or less than 0.905 g/cc, or in the alternative, equal to or less than 0.900 g/cc, or in the alternative, equal to or less than 0.895 g/cc, or in the alternative, equal to or less than 0.890 g/cc, or in the alternative, equal to or less than 0.885 g/cc. In a particular embodiment, the density of the olefin-based plastomer or elastomer is greater than or equal to 0.860 g/cc. All individual values and subranges from greater than or equal to 0.860 g/cc are included and disclosed herein. For example, the density of the olefin-based plastomer or elastomer is greater than or equal to 0.860 g/cc, or in the alternative, greater than or equal to 0.865g/cc, or in the alternative, greater than or equal to 0.870 g/cc, or in the alternative, greater than or equal to 0.875 g/cc. Examples of low density olefin-based plastomer or elastomer useful in the polymer blend include, but are not limited to those under the names AFFINITY, VERSIFY, ENGAGE, and INFUSE which are commercially available from The Dow Chemical Company (Midland, MI, USA). In addition, examples of low density olefin-based plastomer or elastomer useful in the polymer blend include, but are not limited to those under the names VISTAMAXX and EXACT which are commercially available from Exxon Mobil (Houston, TX, USA) and QUEO which is commercially available from Borealis (Vienna, Austria).

The film comprises from 5 to 10 wt% of a high modulus amorphous polymer. All individual values and subranges from 5 to 10 wt% are included and disclosed herein; for example, the amount of the high modulus amorphous polymer can range from a lower limit of 5, 6, 7, 8, or 9 wt% to an upper limit of 5.5, 6.5, 7.5, 8.5, 9.5 or 10 wt%. For example, the amount of the high modulus amorphous polymer is from 5 to 10 wt%, or in the alternative, from 5 to 7.5 wt%, or in the alternative, from 7.5 to 10 wt%, or in the alternative, from 6.5 to 8.5 wt. The high modulus amorphous polymer a 2% secant modulus of greater than 500 MPa measured according to ASTM D882. All individual values and subranges from greater than 500 MPa are included and disclosed herein. For example, the high modulus amorphous polymer may have a 2% secant modulus of greater than 500 MPa measured according to ASTM D882, or in the alternative, greater than 600 MPa, or in the alternative, greater than 700 MPa. In a particular embodiment, the high modulus amorphous polymer has a 2% secant modulus of less than 2500 MPa measured according to ASTM D882. All individual values and subranges from less than 2500 MPa are included and disclosed herein. For example, the 2% secant modulus can be less than 2500 MPa, or in the alternative, less than 2000 MPa, or in the alternative, less than 1500 MPa. The high modulus amorphous polymer is a cyclic olefin copolymer.

Cyclic olefin copolymers are produced by chain copolymerization of cyclic monomers such as 8,9,10-trinorborn-2-ene (norbornene) or 1,2,3,4,4a,5,8,8a-octahydro-1,4:5,8-dimethanonaphthalene (tetracyclododecene) with ethylene. Examples of cyclic olefin copolymers include those available under the name TOPAS from TOPAS Advanced Polymers, Inc. (Florence, KY, USA) and the name APEL from Mitsui Chemicals America, Inc. (Rye Brook, NY, USA).). As used herein, cyclic olefin copolymers also include those compounds made by ring-opening metathesis polymerization of various cyclic monomers followed by hydrogenation, such as those available under the name ARTON from JSR Corp. (Minato-ku, Tokyo, Japan) and under the names ZEONEX and ZEONOR from ZEON Chemicals L.P. (Louisville, KY, USA).

High density polyethylenes useful in the polymer blend include those available under the name ELITE from The Dow Chemical Company, such as ELITE 5960G, and ELITE 5940G.

A film comprising the polymer blend exhibits an oxygen transmission rate (OTR) of equal to or greater than 10,000 cc/m²+day. All individual values and subranges from equal to or greater than 10,000 cc/m²+day are included and disclosed herein. For example, the OTR is equal to or greater than 10,000 cc/m²+day, or in the alternative, equal to or greater than 12,000 cc/m²+day, or in the alternative, equal to or greater than 14,000 cc/m²+day. In a particular embodiment, a film comprising the polymer blend exhibits an oxygen transmission rate (OTR) of equal to or less than 30,000 cc/m²+day. All individual values and subranges from equal to or less than 30,000 cc/m²+day are included and disclosed herein. For example, the OTR can range from equal to or less than 30,000 cc/m²+day, or in the alternative, equal to or less than 25,000 cc/m²+day, or in the alternative, equal to or less than 20,000 cc/m²+day.

The disclosure further provides the film, packaging and method of making and filling a packaging according to any embodiment disclosed herein except that the high modulus amorphous polymer is a cyclic olefin copolymer having a Tg of equal to or greater than 60 °C. All individual values and subranges from equal to or greater than 60 °C are included and disclosed herein. For example, the Tg of the cyclic olefin copolymer is equal to or greater than 60 °C, or in the alternative, equal to or greater than 70 °C, or in the alternative, equal to or greater than 80 °C. Exemplary cyclic olefin copolymers include norbornene / ethylene copolymers 1,2,3,4,4a,5,8,8a-octahydro-1,4:5,8-dimethanonaphthalene (tetracyclododecene) /ethylene copolymers and compounds made by ring-opening metathesis polymerization, such as having the following structure:

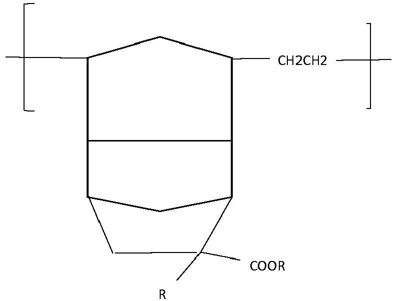

The disclosure further provides the film, packaging and method of making and filling a packaging according to any embodiment disclosed herein except that the film has a 25.4 µm (1 mil) thickness and exhibits a 2% secant modulus measured according to ASTM D882 of equal to or greater than 120 MPa. All individual values equal to or greater than 120 MPa are included and disclosed herein. For example, a 25.4 µm (1 mil) thickness and exhibits a 2% secant modulus measured according to ASTM D882 of equal to or greater than 120 MPa, or in the alternative, equal to or greater than 125 MPa, or in the alternative, equal to or greater than 130 MPa.

The disclosure further provides the film, packaging and method of making and filling a packaging in accordance with any embodiment disclosed herein, except that the packaging is a non-frozen fish packaging.

The disclosure further provides the film, packaging and method of making and filling a packaging in accordance with any embodiment disclosed herein, except that the packaging is made using vertical form, fill and seal (VFFS) equipment or horizontal form, fill and seal (HFFS) equipment.

The disclosure further provides a method of making the film according to any embodiment disclosed herein comprising forming the polymer blend into a film by one or more of film blowing and film casting processes.

In yet another embodiment, the disclosure provides a multilayer structure wherein the film according to any embodiment disclosed herein is coextruded with one or more other low density olefin-based plastomers or elastomers.

### Examples

The following examples illustrate the present invention but are not intended to limit the scope of the invention.

Several polymer blends were prepared by dry mixing pellets of the individual polymer components as shown in Table 1.

**Table 1**

| | wt% Polymer | wt% Polymer |
|---|---|---|
| Blend Ex. 1 | 90% AFFINITY PF 1140G | 10% TOPAS 8007 |
| Blend Ex. 2 | 95% AFFINITY PF 1140G | 5% TOPAS 8007 |
| Blend Ex. 3 | 90% AFFINITY PF 1140G | 10% TOPAS 6013 |
| Blend Ex. 4 | 95% AFFINITY PF 1140G | 5% TOPAS 6013 |
| Blend Ex. A | 100% AFFINITY PF 1140G | NONE |
| Blend Ex. B | 90% AFFINITY PF 1140G | 10% ELITE 5960G |
| Blend Ex. C | 95% AFFINITY PF 1140G | 5% ELITE 5960G |
| Blend Ex. D | 100% AFFINITY PF 1840G | NONE |
| Blend Ex. E | 90% AFFINITY PF 1840G | 10% TOPAS 8007 |
| Blend Ex. F | 95% AFFINITY PF 1840G | 5% TOPAS 8007 |
| Blend Ex. G | 90% AFFINITY PF 1840G | 10% TOPAS 6013 |
| Blend Ex. H | 95% AFFINITY PF 1840G | 5% TOPAS 6013 |
| Blend Ex. I | Dowlex 2045G | NONE |

AFFINITY PF 1140G is a polyolefin plastomer having a density of 0.897 g/cc and an I₂ of 1.6 g/10min (commercially available from The Dow Chemical Company). ELITE 5960G is a polyethylene resin having a density of 0.962 g/cc and an I₂ of 0.85 g/10min (commercially available from The Dow Chemical Company). TOPAS 8007 is a cyclic olefin copolymer made from norbornene and ethylene using a metallocene catalyst and having a density of 1.02 g/cc measured according to ISO 1183 and a volume flow index of 32 ml/10min measured according to ISO 1133 (260 °C, 2.16 kg). TOPAS 6013 is a cyclic olefin copolymer having a density of 1.02 g/cc measured according to ISO 1183 and a volume flow index of 14 ml/10min measured according to ISO 1133 (260 °C, 2.16 kg).

25.4 µm (1 mil) and 50.8 µm (2 mil) films are made with each of Blend Ex. 1-4 and A-C. A 5-layer blown film line from Labtech Engineering Co., Ltd. was used to prepare the films with the following conditions:
- 75mm diameter of pancake die
- Machine is designed for layer ratios of:
   - Extruder A: 30% of the structure
   - Extruder B: 10% of the structure
   - Extruder C: 20% of the structure
   - Extruder D: 10% of the structure
   - Extruder E: 30% of the structure
- 2 x 25mm, 3 x 20mm extruders equipped with gravimetric feed system
- Dual lip air ring, cooled nip rolls
- 550mm tower and up to 4.0 blow up ratio (BUR) capability

The blown film process was conducted with the following conditions: Output: 16 kgs (36 lbs) per hour; and specific extruder output set points:
- Extruder A: 4.9 kgs (10.8 lbs) per hour
- Extruder B: 1.6 kgs (3.6 lbs) per hour
- Extruder C: 3.3 kgs (7.2 lbs) per hour
- Extruder D: 1.6 kgs (3.6 lbs) per hour
- Extruder E: 4.9 kgs (10.8 lbs) per hour

The normalized OTR measured on the 25.4 µm (1 mil) and 50.8 µm (2 mil) films data are shown in Table 2. As can be seen in Tables 2A-2B and 3A-3B, OTR remains in an acceptable range with addition of the TOPAS 8007 or 6013.

**Table 2A**

| **25.4 µm (1 mil) films** | **Blend Ex. 1** | **Blend Ex. 2** | **Blend Ex. 3** | **Blend Ex. 4** | **Blend Ex. A** | **Blend Ex. B** | **Blend Ex. C** |
|---|---|---|---|---|---|---|---|
| **OTR (cc.25.4 µm/m².day) ((cc.mil/m².day))** | 14,962 (±470) | 16,192 (±410) | 18,014 (±270) | 22,812 (±50) | 19,939 (±230) | 16,221 (±280) | 18,720 (±85) |

**Table 2B**

| **25.4 µm (1 mil) films** | **Blend Ex. D** | **Blend Ex. E** | **Blend Ex. F** | **Blend Ex. G** | **Blend Ex. H** | **Blend Ex. I** |
|---|---|---|---|---|---|---|
| **OTR (cc.25.4 µm/m².day) ((cc.mil/m².day))** | 11,810 (±130) | 8,771 (±150) | 7,449 (±630) | 10,635 (±550) | 9,171 (±2,290) | 8,386 (±225) |

**Table 3A**

| **50.8 µm (2 mil) films** | **Blend Ex. 1** | **Blend Ex. 2** | **Blend Ex. 3** | **Blend Ex. 4** | **Blend Ex. A** | **Blend Ex. B** | **Blend Ex. C** |
|---|---|---|---|---|---|---|---|
| **OTR (cc.25.4 µm/m².day) ((cc.mil/m².day))** | 13,528 (±480) | 15,728 (±17) | 17,058 (±360) | 20,555 (±250) | 21,888 (±430) | 17,400 (±48) | 17,827 (±15) |

**Table 3B**

| **50.8 µm (2 mil) films** | **Blend Ex. D** | **Blend Ex. E** | **Blend Ex. F** | **Blend Ex. G** | **Blend Ex. H** | **Blend Ex. I** |
|---|---|---|---|---|---|---|
| **OTR (cc.25.4 µm/m².day) ((cc.mil/m².day))** | 10,281 (±307) | 7,580 (±89) | 9,065 (±410) | 7,472 (±484) | 10,454 (±449) | 7,522 (±554) |

Tables 4A-4B and 5A-5B provide the 2% secant modulus for the various films made from the polymer blends. The 2% secant modulus MD and CD increase with increasing the amount of TOPAS 8007. The 2% MD modulus is increased by about 2.5 times after adding 10% of TOPAS 8007. A much lower increase in the MD modulus is obtained when using ELITE 5960 instead of TOPAS 8007.

**Table 4A**

| **1 mil films** | **Blend Ex. 1** | **Blend Ex. 2** | **Blend Ex. 3** | **Blend Ex. 4** | **Blend Ex. A** | **Blend Ex. B** | **Blend Ex. C** |
|---|---|---|---|---|---|---|---|
| **2% Secant Modulus CD (MPa)** | 78.3 (±12) | 78.9 (±14) | 75.8 (±13) | 64.5 (±6.8) | 53.1 (±1.2) | 89.6 (±10) | 70.2 (±8.1) |
| **2% Secant Modulus MD (MPa)** | 165 (±18) | 105 (±18) | 202 (±13) | 115 (±7.0) | 66.9 (±10) | 88.2 (±8.3) | 71.4 (±9.2) |

**Table 4B**

| **25.4 µm (1 mil) films** | **Blend Ex. D** | **Blend Ex. E** | **Blend Ex. F** | **Blend Ex. G** | **Blend Ex. H** | **Blend Ex. I** |
|---|---|---|---|---|---|---|
| **2% Secant Modulus CD (MPa)** | 87.0 (±7.9) | 134 (±25) | 99.0 (±7.7) | 143 (±17) | 97.4 (±6.6) | 194 (±32) |
| 2% **Secant Modulus MD (MPa)** | 88.3 (±6.2) | 202 (±29) | 135 (±13) | 274 (±71) | 210 (±46) | 184 (±25) |

**Table 5A**

| **50.8 µm (2 mil) films** | **Blend Ex. 1** | **Blend Ex. 2** | **Blend Ex. 3** | **Blend Ex. 4** | **Blend Ex. A** | **Blend Ex. B** | **Blend Ex. C** |
|---|---|---|---|---|---|---|---|
| **2% Secant Modulus CD (MPa)** | 115 (±15) | 82.1 (±6.2) | 83.3 (±5.0) | 70.0 (±10) | 54.4 (±3.6) | 91.9 (±12.1) | 73.7 (±6.6) |
| **2% Secant Modulus MD (MPa)** | 184 (±15) | 109 (±13) | 182 (±16) | 119 (±11) | 57.4 (±1.9) | 86.4 (±8.2) | 70.6 (±5.8) |

**Table 5B**

| **50.8 µm (2 mil) films** | **Blend Ex. D** | **Blend Ex. E** | **Blend Ex. F** | **Blend Ex. G** | **Blend Ex. H** | **Blend Ex. I** |
|---|---|---|---|---|---|---|
| **2% Secant Modulus CD (MPa)** | 98.6 (±6.5) | 161 (±5.1) | 127 (±11) | 172 (±9.1) | 126 (±9.1) | 217 (±12) |
| **2% Secant Modulus MD (MPa)** | 98.0 (±3.2) | 202 (±19) | 159 (±5.1) | 261 (±13) | 164 (±16.2) | 196 (±6.2) |

Table 6 provides the heat seal measurements for certain of the 50.8 µm (2 mil) films made from the polymer blends. The heat seal strength is increased as the amount of TOPAS 8007 increases. A larger increase is observed when TOPAS 8007 is added than when ELITE 5960G is added.

**Table 6**

| **Test Temperature (°C)** | | | | **Heat Seal (kg/25 mm)** | | | |
|---|---|---|---|---|---|---|---|
| | Blend Ex. 1 | Blend Ex. 2 | Blend Ex. 3 | Blend Ex. 4 | Blend Ex. A | Blend Ex. B | Blend Ex. C |
| 80 | 1.440 | 1.233 | 1.004 | 1.122 | 1.086 | 1.139 | 1.106 |
| 90 | 1.817 | 1.530 | 2.106 | 1.918 | 1.348 | 1.475 | 1.472 |
| 100 | 1.593 | 1.503 | 2.208 | 1.972 | 1.359 | 1.594 | 1.530 |
| 110 | 1.836 | 1.608 | 1.826 | 1.727 | 1.345 | 1.468 | 1.373 |
| 120 | 1.866 | 1.627 | 2.194 | 1.996 | 1.511 | 1.557 | 1.465 |
| 130 | 1.581 | 1.736 | 1.962 | 1.792 | 1.422 | 1.592 | 1.452 |
| 140 | 1.439 | 1.729 | 2.342 | 2.006 | 1.436 | 1.611 | 1.508 |
| 150 | 1.832 | 1.735 | 1.896 | 1.989 | 1.360 | 1.648 | 1.394 |

### Test Methods

Test methods include the following:
Polymer density is measured according to ASTM D792 (unless otherwise indicated).

Melt Index, I₂, is measured according to ASTM D1238 (2.16 kg @ 190°C).

Oxygen Transmission Rate is measured according to ASTM D 3985.

Secant Modulus CD and MD are measured according to ASTM D 882.

Heat Seal measurements were made according to ASTM F1921. The Heat Seal test is a gauge of the strength of seals (Seal Strength) in flexible materials. It does this by measuring the force required to separate a test strip of material containing the seal and identifying the mode of specimen failure. Seal Strength is relevant to the opening force and package integrity.

## Claims

1. A film comprising a polymer blend which comprises:
from 90 to 95 wt% of a low density olefin-based plastomer or elastomer having a density equal to or less than 0.905 g/cc, wherein plastomer means a homogeneously branched substantially linear ethylene polymer with a density in the range of from 0.85 to 0.905 g/cc as measured according to ASTM D-792 and elastomer means an ethylene copolymer elastomer;
from 5 to 10 wt% of a high modulus amorphous polymer, wherein the high modulus amorphous polymer is a cyclic olefin copolymer having a 2% secant modulus of greater than 500 MPa measured according to ASTM D882.
wherein a film comprising the polymer blend exhibits an oxygen transmission rate (OTR) of equal to or greater than 10,000 cc/m²+day as measured according to ASTM D3985.

2. The film according to claim 1, wherein the film has a 25.4 µm (1 mil) thickness and exhibits a 2% secant modulus CD measured according to ASTM D882 of equal to or greater than 60 MPa.

3. A packaging comprising the film according to claim 1.

4. The packaging according to claim 3, wherein the packaging is a non-frozen fish packaging.

5. A method of making the film according to claim 1 comprising forming a film from the composition of claim 1 by one or more of film blowing and film casting processes.

6. A method of making and filling a packaging comprising:
forming a pouch from the film of claim 1 wherein the pouch has an open side;
filling the pouch with a product;
sealing the open side of the pouch to form a packaging.

7. The method of claim 6 wherein the forming, filling and sealing is conducted using vertical form fill and seal equipment.

8. The method of claim 6 wherein the forming, filling and sealing is conducted using horizontal form fill and seal equipment.

## Patentansprüche

1. Eine Folie, die eine Polymermischung beinhaltet, die Folgendes beinhaltet:
zu 90 bis 95 Gew.-% ein olefin-basiertes Plastomer oder Elastomer niedriger Dichte, das eine Dichte von gleich oder weniger als 0,905 g/cm³ aufweist, wobei Plastomer ein homogen verzweigtes, im Wesentlichen lineares Ethylenpolymer mit einer Dichte im Bereich von 0,85 bis 0,905 g/cm³, wie gemäß ASTM D-792 gemessen, bedeutet und Elastomer ein Ethylencopolymer-Elastomer bedeutet;
zu 5 bis 10 Gew.-% ein amorphes Polymer mit hohem Modul, wobei das amorphe Polymer mit hohem Modul ein zyklisches Olefincopolymer ist, das einen 2 %-Sekantenmodul von mehr als 500 MPa, gemessen gemäß ASTM D882, aufweist;
wobei eine Folie, die die Polymermischung beinhaltet, eine Sauerstoffdurchlassrate (Oxygen Transmission Rate, OTR) von gleich oder mehr als 10 000 cm³/m²-Tag, wie gemäß ASTM D3985 gemessen, vorweist.

2. Folie gemäß Anspruch 1, wobei die Folie eine Dicke von 25,4 µm (1 mil) aufweist und einen 2 %-Sekantenmodul CD, gemessen gemäß ASTM D882, von gleich oder mehr als 60 MPa vorweist.

3. Eine Verpackung, die die Folie gemäß Anspruch 1 beinhaltet.

4. Verpackung gemäß Anspruch 3, wobei die Verpackung eine Verpackung für nichtgefrorenen Fisch ist.

5. Ein Verfahren zum Herstellen der Folie gemäß Anspruch 1, das das Bilden einer Folie aus der Zusammensetzung nach Anspruch 1 durch einen oder mehrere Folienblas- und Foliengießprozesse beinhaltet.

6. Ein Verfahren zum Herstellen und Füllen einer Verpackung, die Folgendes beinhaltet:
Bilden eines Beutels aus der Folie nach Anspruch 1, wobei der Beutel eine offene Seite aufweist;
Füllen des Beutels mit einem Produkt;
Versiegeln der offenen Seite des Beutels, um eine Verpackung zu formen.

7. Verfahren nach Anspruch 6, wobei das Bilden, Füllen und Versiegeln unter Verwendung einer vertikalen Schlauchbeutelanlage durchgeführt wird.

8. Verfahren nach Anspruch 6, wobei das Bilden, Füllen und Versiegeln unter Verwendung einer horizontalen Schlauchbeutelanlage durchgeführt wird.

## Revendications

1. Un film comprenant un mélange de polymères qui comprend :
de 90 à 95 % en poids d'un élastomère ou plastomère à base d'oléfine basse densité ayant une masse volumique inférieure ou égale à 0,905 g/cm³, où plastomère signifie un polymère d'éthylène substantiellement linéaire ramifié de façon homogène avec une masse volumique comprise dans la gamme allant de 0,85 à 0,905 g/cm³ telle que mesurée selon l'ASTM D-792 et élastomère signifie un élastomère copolymère d'éthylène ;
de 5 à 10 % en poids d'un polymère amorphe à haut module, où le polymère amorphe à haut module est un copolymère d'oléfine cyclique ayant un module sécant à 2 % supérieur à 500 MPa mesuré selon l'ASTM D882 ;
où un film comprenant le mélange de polymères présente un taux de transmission d'oxygène (OTR) supérieur ou égal à 10 000 cm³/m².jour tel que mesuré selon l'ASTM D3985.

2. Le film selon la revendication 1, où le film a une épaisseur de 25,4 µm (1 mil) et présente un module sécant à 2 % CD mesuré selon l'ASTM D882 supérieur ou égal à 60 MPa.

3. Un emballage comprenant le film selon la revendication 1.

4. L'emballage selon la revendication 3, où l'emballage est un emballage pour poisson non congelé.

5. Un procédé de fabrication du film selon la revendication 1 comprenant la formation d'un film à partir de la composition de la revendication 1 par un ou plusieurs processus parmi les processus de soufflage de film et de coulage de film.

6. Un procédé de fabrication et de remplissage d'un emballage comprenant :
la formation d'une poche à partir du film de la revendication 1 où la poche a un côté ouvert ;
le remplissage de la poche avec un produit ;
le scellage étanche du côté ouvert de la poche afin de former un emballage.

7. Le procédé de la revendication 6 où la formation, le remplissage et le scellage étanche sont menés en utilisant un équipement de remplissage et de scellage de forme verticale.

8. Le procédé de la revendication 6 où la formation, le remplissage et le scellage étanche sont menés en utilisant un équipement de remplissage et de scellage de forme horizontale.
